(19) Europäisches Patentamt

European Patent Office

Office européen des brevets

(11) **EP 1 312 263 A1**

(12) **EUROPEAN PATENT APPLICATION**
published in accordance with Art. 158(3) EPC

(43) Date of publication:
**21.05.2003 Bulletin 2003/21**

(51) Int Cl.⁷: **A01N 63/00**

(21) Application number: **00954262.2**

(86) International application number:
**PCT/CN00/00237**

(22) Date of filing: **16.08.2000**

(87) International publication number:
**WO 02/013613 (21.02.2002 Gazette 2002/08)**

(84) Designated Contracting States:
**AT BE CH CY DE DK ES FI FR GB GR IE IT LI LU MC NL PT SE**
Designated Extension States:
**AL LT LV MK RO SI**

(71) Applicant: **Yuen Foong Yu Paper MFG Company, Limited**
**Taipei, Taiwan (TW)**

(72) Inventors:
• **HSIEH, Shihpanyu**
  **Taichung (CN)**
• **HUANG, Ruizhi**
  **Ruiyuan Li, Dashi Jen, Taoyuan (CN)**

(74) Representative: **Behnisch, Werner, Dr.**
**Reinhard-Skuhra-Weise**
**Friedrichstrasse 31**
**80801 München (DE)**

(54) **METHOD FOR PRODUCING WORKING REAGENT AND FOR BIOLOGICAL PREVENTION OR CONTROL**

(57)    The present invention provides a method for producing an agent to be used in biocontrol and prevent plant from suffering the disease. The method is to provide a microorganism object for working on an object, combine the microorganism object with a modeling material to form an intermediate, and add a modeling reagent to the intermediate to form the reagent. In practice, the microorganism agent is applied in a paddy rice system to make the agent to contact plant and release the microorganism object on the plant to control and prevent the plant disease.

**Description**

The present invention relates to a method for producing a microorganism agent to achieve the purpose of biocontrol, and also to a method and for protecting the plants.

Traditionally, farmers apply agricultural chemicals to prevent plants and crops from suffering from the diseases, which will increase the yield of the crops and reduce the probability of suffering from the diseases. When the agricultural chemical is applied in a high concentration or in the late harvesting period, it will cause the residue of agricultural chemical on the crop. An acute poison will cause damage to the human health by accumulating the high concentration of agricultural chemical in the body.

Now, using the antagonistic microorganism for biocontrol makes the application of the non-agricultural chemical to be possible in controlling and preventing the plant diseases. In general situation, it is operated by widely spraying the controlling microorganism over the cultivation area to prevent and control the plant diseases. But the spraying method is labor extensive work in order to have even spray the microorganism to the right place of the pathogen invading site of the plant. To take the *Rhizoctonia solani,* the causal organism of rice sheath blight disease of the paddy rice as an example, the invading sites are usually on the leaf sheath. In order to have effective spraying on leaf sheath, Sometimes, the spray rod has to be inserted inside the rice hills that might hurt the rice plant and resulted in bringing a lot of wounds caused by compacting with the leaf when the spray rod is moving between the hills. Thus the spraying method can't be efficiently applied to control the microorganism to work on the leaf sheath. And the wounds on the plant will also increase the probability of suffering from infection of disease because the pathogen will easily invade the wounded paddy rice through the wounds.

Therefore, it is attempted by the applicant to provide a method which can rectify the problem caused upon applying a microorganism to the plant and to provide an efficient method to be applied in biocontrol and preventing pathogen infection.

It is therefore an object of the present invention to provide a microorganism object to replace the traditional agricultural chemical for solving its improper and massive usage upon cultivating the plant.

It is therefore another object of the present invention to provide a microorganism object to be applied in biocontrol. In addition to provide a method for a microorganism correctly entering the possible invading site of the plant and decreasing the probability of a pathogen entering the possible invading site of the plant in order to increase the efficiencies for preventing infection and killing the pathogen.

According to the present invention, there is provided a method for producing an agent which comprises a step (a) of providing a microorganism object to be operated on an object, a step (b) of combining the microorganism object with a modeling material to form an intermediate, and a step (c) of adding a modeling reagent to the intermediate, and forming the agent.

Preferably, the agent further comprises a carrier for carrying the microorganism object. The microorganism object is a kind of antagonistic microorganism, e. g. *Gliocladium virens.* The antagonistic microorganism of *Gliocladium virens* is to antagonize *Rhizoctonia solani* AG-1 the causal organism of rice sheath blight.

Preferably, the modeling material further comprises an agglutinate material, an inoculating medium and a floating reagent. The inoculating medium is chlamydospore formulation. The floating reagent is Sodium Alginate for modeling the intermediate. The floating reagent is selected from air bubble or non-water-affinity material for providing the agent with an ability of floating on irrigation water.

Preferably, the non-water-affinity material is a kind of vegetable oil selected from the soybean oil.

Preferably, the modeling reagent is Calcium Chloride solution for agglomerating with the agglutinate material of the modeling material.

According to another aspect of the present invention, there is provided a method for an agent to work comprising a step (a) of providing an agent having a microorganism object therein, a step (b) of making the agent to contact an object and a step (c) releasing the microorganism object from the agent to work on the object.

According to a further aspect of the present invention, there is provided a method for an agent to control and prevent plant disease comprising a step (a) of providing an agent having a microorganism object therein for controlling and preventing plant disease, a step (b) of making the agent contact the plant, and a step (c) of releasing the microorganism object from the agent to work on the object to control and prevent the plant disease.

Preferably, the method is applicable to plant hydroponic system. In the step (b), the contact is to make the agent attach to the object.

A better understanding of the present invention can be obtained when the following detailed description of a preferred embodiment is considered in conjunction with the followed tables.

The present invention provides a method for producing an agent to be applied for biocontrol. First, a carrier is provided to carry a microorganism object which is *Gliocladium virens* to be used as an antagonizing microorganism for antagonizing *Rhizoctonia solani* AG-1 and preventing the disease of rice sheath blight, *Rhizoctonia solani.*

Next, a modeling material will be added to the microorganism object to form an intermediate that includes an agglutinant, an inoculating medium and a floating reagent therein. 2 % Sodium Alginate is used as the agglutinant for the modeling usage, which will be further agglomerated with the calcium ions in calcium chloride solution. The chlamydospore liquid formulation as the inoculating medium is used for inoculating the *Gliocladium virens,* which is the microorganism object in the present invention. The floating agent is made by air or non-water-affinity material to make the microorganism agent have an ability of floating. 10 % vegetable soybean oil is added to the microorganism object to be used as the floating reagent in the present invention.

Thereafter, the calcium chloride solution as the modeling reagent is added to the intermediate as described in the last paragraph for producing the agglomerating reaction to agglomerate the calcium chloride solution with the sodium alginate therein. Subsequently, the agent includes the microorganism object with a floating ability, which will be further dried to complete the producing process.

On the other hand, upon applying the agent that includes an antagonistic microorganism, *Gliocladium virens,* for biocontrol and preventing the rice sheath blight disease of paddy rice, *Rhizoctonia solani*, the floating ability of the microorganism agent is utilized in the plant hydroponic system. Thus, the surface tension and the flowing ability of water will drive the floating microorganism agent to flow toward the stem of the paddy rice and cause the floating microorganism agent to be attached to the leaf sheath of the paddy rice. After attaching to the paddy rice, the microorganism agent will germinate, grow, and occupy the surface of the leaf sheath. When a pathogen is approaching to the leaf sheath of the paddy rice, the microorganism agent will process antibiotic reaction, hyper parasitism and competitism to inhibit the pathogenic activity and obtain the purpose of preventing the paddy rice from suffering the disease. The processing progresses and results of biocontrol and preventing the rice sheath blight disease of the field experiment in the paddy rice are detailedly described in the following description.

EMBODIMENT OF APPLYING THE MICROORGANISM AGENT IN A PADDY RICE FIELD FOR BIOCONTROL AND PREVENTING LESION

A first paddy rice field area is divided into several small plots. The floating microorganism agent in granular formulation, *Gliocladium virens*, is scattered in the amount of 100 grams to each small plot at about the fiftieth day after transplanting during the tillering maximum stage. In the next week, or with the passing of seven days, another 50 grams of floating microorganism agent are further administered to each small plot.

What is obtained by processing as above-mentioned in the last paragraph is the experimental treatment. There are also provided with two treatments of spraying the chlamydospore liquid formulation one time and three times respectively. An unprocessing blank as the control treatment is provided for being processed on the paddy rice field. In the first paddy field, an experimental treatment, two treatments of spraying the chlamydospore liquid formulation one time and three times, and a control treatment are replicated four times to test the biocontrol and lesion preventing efficiency of the microorganism agent.

We first record the results by observing the growth condition of the paddy rice and the occurrence of sheath blight disease happening in relevant small plots of the paddy rice field. Then we investigate the rice fresh weight and the dry weight of the rice while harvesting, and measure the relative lesion height of the infected paddy rice as the parts of results. The relative lesion height is measured by the following equation.

$$\text{Relative Lesion Height \%} = \frac{\text{Highest point a lesion is seen (cm)}}{\text{Plant height}} \times 100\ \%$$

The results of the above-mentioned paddy rice field areas are shown in Table 1.

Table 1.

| Control of the rice sheath blight of the first area in paddy rice field by using a microorganism agent | | | |
|---|---|---|---|
| Treatments | Relative Lesion Highest (%) * | Fresh weight * | Dry Weight * |
| Experimental treatment (Scattering floating Microorganism agent, granules) | 13.4 % | 8148.8 | 6852.4 |
| Spraying the chlamydospore liquid formulation 1 time | 23.4% | 7917.3 | 6620.9 |

* Means that the fresh weight, dry weight and relative lesion height are representative for each of the four replicated treatments. The values in the same column are not significantly different (under p=0.05) according to Duncan's multiple range tests.

Table 1.  (continued)

| Control of the rice sheath blight of the first area in paddy rice field by using a microorganism agent | | | |
|---|---|---|---|
| Treatments | Relative Lesion Highest (%) * | Fresh weight * | Dry Weight * |
| Spraying the chlamydospore liquid formulation 3 times | 37.6 % | 7593.2 | 6250.5 |
| Control treatment (Unprocess blank) | 41.4 % | 6898.7 | 5648.6 |

* Means that the fresh weight, dry weight and relative lesion height are representative for each of the four replicated treatments. The values in the same column are not significantly different (under p=0.05) according to Duncan's multiple range tests.

As can be seen, the relative lesion height of the experimental treatment by scattering granules of the microorganism agent is 13.4 %, the two treatments of respectively spraying the chlamydospore liquid formulation one time and three times are 23.4% and 37.6 % respectively, and the control treatment is 41.4 %. The results in Table 1 tell a significant difference in statistics, which reveals that the relative lesion heights of experimental treatment by using floatable granules of the microorganism agent and two treatments of spraying the chlamydospore liquid formulation one time and three times are all lower than that of the control treatment. It thus shows the present invention does have the advantage of preventing the paddy rice from suffering the rice sheath blight disease.

The fresh weight of the rice of the experimental treatment is 8148.8 kg/ha, those of the two spraying treatments of spraying the chlamydospore liquid formulation one time and three times are 7917.3 kg/ha and 7593.2 kg/ha, respectively, and that of the control treatment is 6898.7kg/ha, which also reveals a significant difference in statistics. As anticipated, the dry weight of the rice of the experimental treatment is 6852.2 kg/ha which is more than those of the two treatments of spraying the chlamydospore liquid formulation one time and three times and the control treatment, which are 6620.9 kg/ha and 6250.5 kg/ha, is 5648.6kg/ha respectively, This also reveals a significant difference in statistics.

A second paddy rice field area is also divided into several small plots. The floating microorganism agent, *Gliocladium virens*, is scattered in the amount of 100 grams to each small plot at about the seventieth day during the tillering maximum stage. 100 grams of floating microorganism agent are further scattered in the next week or at the 77th days, and another 50 grams of floating microorganism agent are scattered to the same small plot at the 84th days.

What is obtained by processing as mentioned above is the secondary experimental treatment. There are also provided with two treatments of spraying the chlamydospore liquid formulation one time and three times and another unprocess blank as the secondary control treatment on the second paddy rice field. These four treatments also are replicated four times to test the biocontrol and lesion preventing efficiency of the microorganism agent.

We observe the growth condition of the paddy rice and what is the probability of the sheath blight disease happening in the relevant small plots of the secondary paddy rice field. Then we measure the relative lesion height of the infected paddy rice. The relative lesion height is measured by the following equation.

$$\text{Relative Lesion Height \%} = \frac{\text{Highest point a lesion is seen (cm)}}{\text{Plant height}} \times 100\%$$

The results of the secondary paddy rice field area tests are shown in Table 2.

Table 2.

| Control of the rice sheath blight of the second area in paddy rice field by using a microorganism agent | |
|---|---|
| Treatments | Relative Lesion Highest (%) * |
| Secondary experimental treatment (Using floating Microorganism agent) | 18.75 % |
| Spraying the chlamydospore liquid formulation 1 time | 13.5 % |
| Spraying the chlamydospore liquid formulation 3 times | 29.5 % |
| Secondary control treatment (Unprocess blank) | 47.25 % |

* Means that the fresh weight, dry weight and relative lesion height are representative for each of the four replicated treatments. The values in the same column are not significantly different (under p=0.05) according to Duncan's multiple range tests.

As can be seen, the relative lesion height of the experimental treatment by using the floating microorganism agent in the secondary area is 18.75 %, the two treatments of respectively spraying the chlamydospore inoculation medium one time and three times are 13.5 % and 29.5 % respectively and the secondary control treatment is 47.25 %. Accordingly, the results in Table 1 tell a significant difference in statistics, which reveals that the relative lesion heights of the secondary experimental treatment by using the microorganism agent and two treatments of respectively spraying the chlamydospore inoculation medium one time and three times are all lower than the second control experiment treatments.

Accordingly, the present invention discloses a method for producing microorganism agent and its application for biocontrol and preventing the plant from suffering the disease. Compared to the prior skill, the present invention can reduce the relative lesion height and prevent the rice sheath blight disease, and can be extensively applied in various biocontrol.

**Claims**

1. A method for producing an agent comprising the steps of:

    (a) providing a microorganism object to act on an object;
    (b) combining the microorganism object with a modeling material to form an intermediate; and
    (c) adding a modeling reagent to the intermediate to form the agent.

2. The method according to claim 1, **characterized in that** the agent further comprises a carrier for carrying the microorganism object.

3. The method according to claim 1, **characterized in that** the microorganism object is a kind of antagonistic microorganism.

4. The method according to claim 3, **characterized in that** the antagonistic microorganism is *Gliocladium virens.*

5. The method according to claim 4, **characterized in that** the antagonistic microorganism is to antagonize *Rhizoctonia solani* AG-1.

6. The method according to claim 1, **characterized in that** the modeling material further comprises an agglutinate material, an inoculating medium and a floating reagent.

7. The method according to claim 6, **characterized in that** the inoculating medium is chlamydospore formulation.

8. The method according to claim 6, **characterized in that** the floating reagent is Sodium Alginate for modeling the intermediate.

9. The method according to claim 6, **characterized in that** the floating reagent is one of air bubble and non-water-affinity material for providing the agent with a floating ability.

10. The method according to claim 9, **characterized in that** the non-water-affinity material is a kind of vegetable oil.

11. The method according to claim 10, **characterized in that** the vegetable oil is a soybean oil.

12. The method according to claim 1, **characterized in that** the modeling reagent is calcium chloride solution for agglomerating with the agglutinate material of the modeling material.

13. A method for an active agent comprising the steps of:

    (a) providing an agent having a microorganism object therein;
    (b) making the agent contact an external object; and
    (c) releasing the microorganism object from the agent to act on the external object.

14. A method for an agent to control and prevent a plant disease comprising the steps of:

    (a) providing an agent having a microorganism object therein for controlling and preventing a plant lesion;

(b) making the agent contact a plant; and

(c) releasing the microorganism from the agent to act on the plant to control and prevent the plant disease.

**15.** The method according to claim 14, **characterized in that** the method is applicable to a plant hydroponic system.

**16.** The method according to claim 14, **characterized in that** the step (b), is executed by making the agent attach on the object.

**17.** An agent comprising:

a microorganism being active on an object;

a modeling material mixing therein the microorganism; and

a modeling reagent shaping the modeling material mixed with the microorganism into the agent.

<table>
<tr><td colspan="2" align="center"><b>INTERNATIONAL SEARCH REPORT</b></td><td>Inte：     onal application No.<br>PCT/CN00/00237</td></tr>
</table>

| A. | CLASSIFICATION OF SUBJECT MATTER |
|---|---|

IPC$^7$   A01N63/00

According to International Patent Classification(IPC) or to both national classification and IPC

| B. | FIELDS SEARCHED |
|---|---|

Minimum documentation searched(classification system followed by classification symbols)

IPC$^7$   A01N, C12N

Documentation searched other than minimum documentation to the extent that such documents are included in the field searched

Electronic data base consulted during the international search(name of data base and, where practicable, search terms used)

CNPAT，WPI

| C. | DOCUMENTS CONSIDERED TO BE RELEVANT |
|---|---|

| Category* | Citation of document, with indication, where appropriate, of the relevant passages | Relevant claim No. |
|---|---|---|
| X | US4724147(James J. Marois et al)<br><br>9 February 1988,<br><br>See the whole document | 1-25 |
| X | US4668512(Jack A.Lewis et al)<br><br>26 May 1987,<br><br>See the whole document | 1-25 |

| ☐ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier document but published on or after the international filing date | | |
| "L" | document which may throw doubts on priority claim(s) or which is cited to establish the publication date of another citation or other special reason(as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 October 2000(17.10.2000) | 0 2 NOV 2000 (0 2. 1 1. 0 0) |

| Name and mailing address of the ISA/<br>The Chinese Patent Office<br>6, Xitucheng Road, Haidian District,<br>Beijing, 100088, China<br>Facsimile No.     86-10-62019451 | Authorized officer<br><br>CHANG,mao<br><br>Telephone No.    86-10-62093906 |
|---|---|

Form PCT/ISA/210(second sheet)(July 1992)